# EUROPÄISCHE PATENTANMELDUNG

(11) **EP 0 622 628 A2**
(43) Veröffentlichungstag der Anmeldung: **02.11.1994**
(21) Anmeldenummer: 94106488.3
(22) Anmeldetag: 26.04.1994
(51) Int. Cl.: G01N 27/04

(54) **Sonde für Materialfeuchtesensor**

(30) Priorität: 29.04.1993 DE 9306441 U; 12.10.1993 DE 4334649
(71) Anmelder: imko INTELLIGENTE MICROMODULE KÖHLER GmbH, D-76275 Ettlingen (DE)
(72) Erfinder: Köhler, Kurt, 76275 Ettlingen (DE); Fundinger, Robin, 76307 Karlsbad (DE)
(74) Vertreter: Trappenberg, Hans

(57) **Zusammenfassung**

Eine Vorrichtung zur Ermittlung der Materialfeuchte eines Mediums durch Bestimmung dessen Dielektrizitätskonstante. Das Medium bildet das Dielektrikum einer Meßleitung. Ein Signalgeber speist in das eine Ende der Meßleitung ein pulsförmiges Signal ein. Am anderen Ende der Meßleitung ist ein Empfänger angeschlossen, der das reflektierte Signal empfängt. Die Zeit, die zwischen dem Beginn des Einspeisens des Signals und dem Eintreffen des reflektierten Signals verstreicht, wird durch eine Einrichtung gemessen. Die Meßleitung ist als Sonde 1' ausgebildet. Der Körper 2' weist im Bereich seiner Oberfläche elektrische Leiter 7e, 7f auf.

## Beschreibung

Die Erfindung betrifft eine Einrichtung zur Ermittlung der Materialfeuchte eines Mediums durch Bestimmung dessen Dielektrizitätskonstante, welches Medium das Dielektrikum einer Meßleitung bildet, mit Hilfe eines Signalgebers, der ein pulsförmiges Signal in das eine Ende der Meßleitung einspeist und eines Empfängers, der an demselben Ende das am anderen Ende der Meßleitung reflektierte Signal empfängt, sowie eine Einrichtung zum Messen der Zeit, die zwischen dem Beginn des Einspeisens des Signals und dem Eintreffen des reflektierten Signals verstreicht.

Es sind verschiedene Verfahren und Vorrichtungen zur Ermittlung der Materialfeuchte eines Mediums bekannt. So gibt es neben chemischen Verfahren auch elektrische Verfahren zur Materialfeuchtebestimmung. Zum einen kann die Materialfeuchte mittels einer elektrischen Leitfähigkeitsmessung bestimmt werden. Dieses Verfahren nimmt einen bevorzugten Platz ein, weil es apparativ einfach und preisgünstig durchführbar ist. Des weiteren kann die Materialfeuchte praktisch verzögerungsfrei kontinuierlich gemessen werden.

Zum anderen kann die Materialfeuchte mittels einer Dielektrizitätskonstantenbestimmung gemessen werden. Zwischen der Dielektrizitätskonstante eines Mediums und dessen Feuchtigkeitsgehalt besteht ein monotoner eindeutiger Zusammenhang.

Die Dielektrizitätskonstante kann mittels einer Anordnung, bei der das zu messende Medium zwischen zwei Platten gebracht wird, über die Kapazität der Anordnung bestimmt werden. Hierbei treten jedoch entweder meßtechnische Probleme oder hinderliche Größen der Kondensatorplatten auf.

Die vorgenannten Probleme werden bei der sogenannten Echomethode umgangen. Hier bildet der Leiter eine endlichlange offene Leitung bekannter Geometrie. An dem elektrischen Anschluß wird ein elektrischer Puls eingeleitet und die Zeit bis zur Rückkehr des Echos vom Ende der Leitung gemessen. Es ist bekannt, die Leitung in Form zweier paralleler Spieße auszubilden, die in das Meßgut gesteckt werden. Aus der Laufzeit des Echos kann man auf die Dielektrizitätskonstante des Mediums und weiter auf den Wassergehalt schließen.

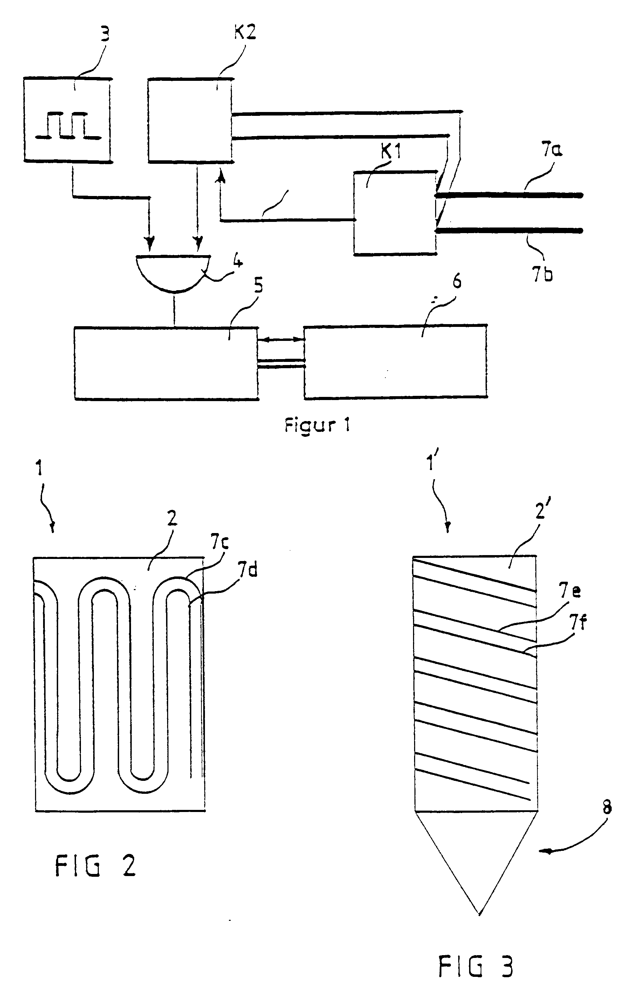

In Fig. 1 ist ein Ausführungsbeispiel der Echomethode beschrieben.

Auf einer am Ende offenen Meßleitung, bestehend aus zwei parallelen Meßstäben 7a, 7b, wird ein Spannungs-anstieg mit möglichst steiler Signalflanke durch eine Signalguelle K1 erzeugt, die mit vernachlässigbarer Länge der Zuleitung angeschlossen ist. Der Innenwiderstand der Signalquelle K1 entspricht dem Wellenwiderstand der offenen Leitung 7a, 7b, soweit dieser mit einfachen Mitteln für die Mitte des Meßbereichs nachbildbar ist. Auf diese Weise entstehen an der Verbindung zwischen dem Ausgang der Signalquelle K1 und der Meßleitung 7a, 7b bei geeignetem Meßbereich wenig störende Reflexionen. Am offenen Ende der Meßleitung 7a, 7b tritt volle Reflexion auf. Das Echo erreichte den Anfang der Leitung einer Zeit, die abhängig von den durch die Feuchte des Dielektrikums beeinflußten physikalischen Daten der Leitung 7a, 7b ist. Durch einen Schwellwertschalter K2, der die Spannung am elektrischen Anschluß der Meßstäbe 7a, 7b mit vorgegebenen Werten vergleicht, wird ein Torsignal für einen Zähler 5 erzeugt, der nur in der Zeit zwischen Beginn der Erregung und dem Eintreffen des Echos Impulse eines freilaufenden Oszillators 3 zählt. Der Zähler 5 ist seinerseits mit einer Auswerte- und Anzeigeeinrichtung 6 verbunden. Der Beginn der Toröffnung kann vorteilhaft auch durch die Signalquelle K1 verzögert eingeleitet werden, so daß eine Öffnung erst erfolgt, nachdem die Reflexion am Anschluß der Meßstäbe vorüber ist.

Durch die Variation der Materialfeuchte ändert sich die Dieleketrizitätskonstante und damit der Kapazitätsbelag des Mediums, das die Stäbe der Meßleitung 7a, 7b umgibt. Nachdem die geometrischen Daten der Meßleitung 7a, 7b konstant sind, folgt daraus ein bekannter Zusammenhang zwischen Materialfeuchte und gemessener Laufzeit des Echos. Dieser kann durch eine Gleichung oder eine Eichkurve gegeben sein.

Obwohl mit der zuvor beschriebenen Anordnung zufriedenstellende Ergebnisse erzielt werden, hat sie doch den Nachteil, daß die Meßstäbe 7a, 7b sehr lang sein müssen, wenn man eine hohe Empfindlichkeit der Anordnung erreichen will. Wegen der Länge der Meßstäbe 7a, 7b gestaltet sich die Handhabung der Anordnung oftmals nicht einfach.

Es ist Aufgabe der Erfindung, eine Vorrichtung der eingangs genannten Art derart auszubilden, daß sie bei hoher Empfindlichkeit einfach zu handhaben ist.

Die Lösung der Aufgabe erfolgt durch die kennzeichnenden Merkmale des Anspruchs 1.

Erfindungsgemäß wird die Meßleitung als eine Sonde ausgebildet, welche einen Körper aufweist, welcher im Bereich seiner Oberfläche elektrische Leiter hat. Durch die erfindungsgemäße Ausgestaltung der Meßleitung läßt sich diese auch bei relativ großer Länge der elektrischen Leiter einfach handhaben. Die Meßleitungen sind nun keine schwierig zu handhabenden langen Stäbe mehr, sondern befinden sich am Umfang eines Körpers, der abhängig von an die Stabilität beziehungsweise Handhabbarkeit der Meßleitung gestellten Anforderungen ausgebildet sein kann. Als besonders vorteilhaft hat sich ein zylinderförmiger Körper herausgestellt.

Die Meßleitung kann zur Erhöhung ihrer Länge den Körper spiralförmig umschlingen oder meanderförmig an seiner Oberfläche verlaufen. Durch eine solche Anordnung kann die wirksame Länge der Meßleitung sehr groß ausgelegt werden, ohne daß dabei die Sonde zu große geometrische Ausmaße annimmt.

Eine Anordnung mit spiralförmigen Leitern, bei der der eine Leiter um den Faktor 2 bis 4, vorzugsweise 3, breiter ist als der andere Leiter, liefert besonders gute Ergebnisse. Durch die unterschiedliche Breite der Leiter wurde die Empfindlichkeit sowie die Genauigkeit der Sonde bedeutend erhöht. Durch die spiralförmige Anordnung der Leiter wird erreicht, daß ein Fehler, der durch eine ungünstige Anordnung der Sonde im Meßmedium erzeugt wird, nahezu ausgemittelt wird. Somit werden Ungenauigkeiten, die dadurch auftreten, daß die Sonde in einem Rohr in das Meßmedium eingeführt wird, und der Abstand der Sondenoberfläche zur Rohrwandung nicht konstant ist, nahezu unterdrückt.

Eine weitere Ausgestaltung der Erfindung sieht vor, daß die Sonde mit einem isolierenden Überzug versehen ist, welcher eine konstante Dielektrizitätskonstante hat. Dadurch wird die Meßleitung vor mechanischen Beschädigungen geschützt, ohne daß das Meßergebnis verfälscht wird.

Eine besondere Ausführungsform der Erfindung sieht vor, daß sich die Anschlüsse der elektrischen Leiter in das Innere des Körpers erstrecken. Dies kann dadurch geschehen, daß sich von den Leitern Bohrungen radial nach innen erstrecken, durch die dann elektrische Leiter, wie beispielsweise Draht, geführt werden. Zweckmäßigerweise werden die Anschlüsse im Inneren des Körpers axial nach außen geführt. Der Körper kann innen hohl oder voll sein. Wenn es zweckmäßig ist, kann ein hohler Körper mit einem vom Körper verschiedenen Material gefüllt sein. Hierdurch kann sich die Empfindlichkeit und Genauigkeit der Sonde nochmals verbessern.

Zur Messung des Feuchtegehalts eines Mediums kann in das Medium ein Rohr gesteckt werden, dessen Innendurchmesser geringfügig größer als der Außendurchmesser der Sonde ist. In das Rohr wird dann die Sonde eingeführt. Somit kann die Sonde zum einen schnell aus dem Medium entfernt werden, um beispielsweise gegen eine andere ausgetauscht zu werden, zum anderen ist es durch diese Anordnung auch möglich, durch Verschieben der Sonde, den Feuchtegehalt ohne großen Aufwand an unterschiedlichen Stellen des Mediums zu messen.

Eine weitere Ausgestaltung der Erfindung sieht vor, daß die Sonde an einem Ende spitz zuläuft. Hierdurch kann die Sonde ohne Verwendung eines Rohrs direkt in das zu messende Medium gesteckt werden. Insbesondere bei einer solchen Ausgestaltung der Sonde ist der schützende Überzug aus einem Material mit konstanter Dielektrizitätskonstante sehr vorteilhaft.

Eine weitere besondere Ausführungsform der Erfindung sieht vor, daß der Körper rohrförmig ausgebildet ist und an seinen Stirnseiten Befestigungsflansche aufweist. Hierdurch ist es auf vorteilhafte Weise möglich, die Sonde in eine Rohrleitung einzubauen und das zu messende Medium durch die Sonde zu befördern. Dies ist besonders vorteilhaft, wenn man den Feuchtegehalt von Schlämmen oder ähnlichem bestimmen will.

Weitere Einzelheiten, Merkmale und Vorteile der vorliegenden Erfindung ergeben sich aus der nachfolgenden Beschreibung unter Bezugnahme auf die Zeichnung.

Es zeigt:
- Fig. 2: eine Sonde mit einer meanderförmig verlaufenden elektrischen Leitung;
- Fig. 3: eine Sonde mit schraubenförmiger Anordnung der elektrischen Leitung und einem spitz zulaufenden Ende;
- Fig. 3a: eine Sonde mit spiralförmiger Anordnung der elektrischen Leiter, wobei die Leiter unterschiedlich breit sind;
- Fig. 4a: eine Sonde mit parallel verlaufenden Leitern in der Vorderansicht; und
- Fig. 4b: die Sonde nach Fig. 4a in der Draufsicht.

In Fig. 2 ist eine zylinderförmige Sonde 1 gezeigt, welche meanderförmig verlaufende elektrische Leiter 7c, 7d auf ihrem Körper 2 aufweist. Die elektrischen Leiter 7c und 7d verlaufen in einem Abstand voneinander, der von dem zu messenden Medium abhängt. Wie deutlich zu sehen ist, erhöht sich durch die meanderförmige Anordnung die Länge der elektrischen Leitung 7c, 7d auf ein Vielfaches der Länge, die Stäbe aufweisen wurden, deren Länge der Höhe der Sonde entspräche. Durch die derart vergrößerte Länge der Meßleitung wird die Emfpindlichkeit der Anordnung stark erhöht.

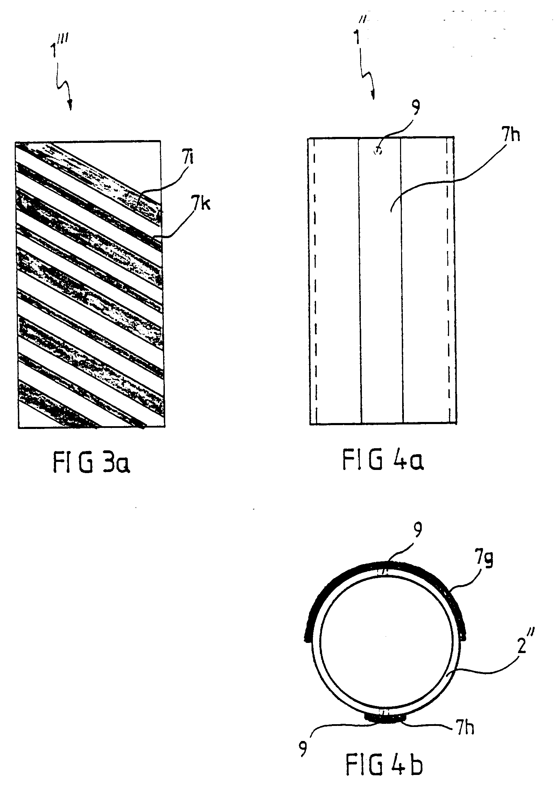

Fig. 3 zeigt eine zylinderförmige Sonde 1', deren unteres Ende 8 spitz zuläuft. Hierdurch läßt sie sich sehr leicht in ein Medium einführen, dessen Feuchtegehalt gemessen werden soll. Der Körper 2' der Sonde 1' weist an seiner Oberfläche schraubenförmig verlaufende elektrische Leiter 7e, 7f auf. Auch hierdurch hat sich die wirksame Länge der Meßleitung stark erhöht. Zum Schutz vor Beschädigungen ist die Sonde mit einem isolierenden Überzug konstanter Dielektrizitätskonstante versehen.

In Fig. 3a ist ebenfalls eine zylinderförmige Sonde 1''' dargestellt, bei der die elektrischen Leiter 7i, 7k unterschiedlich breit sind. Durch die unterschiedliche Breite der elektrischen Leiter wird die Empfindlichkeit der Sonde sowie deren Genauigkeit stark erhöht. Die spiralförmige Wicklung ist insbesondere dann von Vorteil, wenn die Sonde mittels eines Rohrs in das Meßmedium eingeführt wird. Durch die spiralförmige Wicklung wird ein Fehler, der dadurch entsteht, daß die Oberfläche der Sonde nicht überall den gleichen Abstand zur Rohrwandung und damit zum Meßmedium aufweist, kompensiert. Liegt eine Wicklung sehr nahe an der Rohrwandung, gleicht sich dies durch den größeren Abstand auf der gegenüberliegenden Seite wieder aus.

Den Fig. 4a und 4b kann eine zylinderförmige Sonde 2'' entnommen werden, welche zwei elektrische Leiter 7g, 7h auf ihrem Körper 2'' aufweist. Die beiden Leiter 7g, 7h verlaufen in axialer Richtung parallel zueinander. Die Länge der Leiter entspricht nahezu der Länge des zylinderförmigen Körpers 2''. Der eine elektrische Körper 7g erstreckt sich in Richtung des Umfangs über 180°, das heißt er bedeckt nahezu die Hälte der Oberfläche des Körpers 2''. Der andere elektrische Leiter 7h ist dem einen elektrischen Leiter 7g radial gegenüber angeordnet. Durch diese Anordnung ist der Abstand der Außenkanten der Längsseiten der elektrischen Leiter 7g, 7h jeweils gleich zueinander. Der zylinderförmige Körper 2'' ist innen hohl. Durch die Wand des Körpers 2'' erstrecken sich im Bereich der elektrischen Leiter 7g, 7h Öffnungen 9. Durch diese Öffnungen können die Anschlüsse der elektrischen Leiter in das Innere des Körpers 2'' geführt werden.

Obwohl die vorstehend beschriebenen Sonden einen zylinderförmigen Körper 2; 2'; 2'' besitzen, kann der Körper je nach Anforderung auch eine andere Gestalt haben. So kann er dreieckig, viereckig, sechseckig oder auch oval sein. Des weiteren kann der Körper 2; 2'; 2'' innen hohl sein. Auch die Ausbildung als Platte ist möglich. Zu beachten ist jedoch, daß sich im Bereich der Oberfläche in einem Abstand verlaufende elektrische Leiter befinden, deren Verlauf auf das Erreichen einer maximalen Empfindlichkeit ausgerichtet ist.

## Patentansprüche

1. Vorrichtung zur Ermittlung der Materialfeuchte eines Mediums durch Bestimmung dessen Dielektrizitätskonstante, welches Medium das Dielektrikum einer Meßleitung (7a, 7b; 7c, 7d; 7e, 7f; 7g, 7h; 7i, 7k) bildet, mit Hilfe eines Signalgebers (K1), der ein pulsförmiges Signal in das eine Ende der Meßleitung (7a, 7b; 7c, 7d; 7e, 7f; 7g, 7h; 7i, 7k) einspeist und eines Empfängers (K2), der an demselben Ende das am anderen Ende der Meßleitung (7a, 7b; 7c, 7d; 7e, 7f; 7g, 7h; 7i, 7k) reflektierte Signal empfängt sowie eine Einrichtung (3, 4, 5) zum Messen der Zeit, die zwischen dem Beginn des Einspeisens des Signals und dem Eintreffen des reflektierten Signals verstreicht,
dadurch gekennzeichnet,
daß die Meßleitung (7a, 7b; 7c, 7d; 7e, 7f; 7g, 7h; 7i, 7k) als Sonde (1; 1'; 1''; 1''') ausgebildet ist, welche einen Körper (2; 2'; 2'') aufweist, welcher im Bereich seiner Oberfläche elektrische Leiter (7c, 7d; 7e, 7f; 7g, 7h; 7i, 7k) hat.

2. Vorrichtung nach Anspruch 1,
dadurch gekennzeichnet,
daß der Körper (2; 2'; 2'') ein Zylinder ist.

3. Vorrichtung nach Anspruch 1 oder 2,
dadurch gekennzeichnet,
daß die elektrischen Leiter (7c, 7d; 7e, 7f; 7g, 7h; 7i, 7k) etwa parallel verlaufen.

4. Vorrichtung nach einem der
Ansprüche 1 bis 3,
dadurch gekennzeichnet,
daß sich die Leiter in axialer Richtung erstrecken und sich einer der elektrischen Leiter (7g) in Richtung des Umfangs des Körpers (2'') über einen Bereich von etwa 180° erstreckt und ein anderer elektrischer Leiter (7a) sich in Richtung des Umfangs des Körpers (2'') über einen Bereich von etwa 35° erstreckt.

5. Vorrichtung nach einem der
Ansprüche 1 bis 3,
dadurch gekennzeichnet,
daß sich die Leiter (7e, 7f) schraubenförmig um den Körper (2') erstrecken.

6. Vorrichtung nach einem der
Ansprüche 1 bis 5,
dadurch gekennzeichnet,
daß der eine (7i) der Leiter (7a, 7b; 7c, 7d; 7e, 7f; 7g, 7h; 7i, 7k) zwei- bis viermal, vorzugsweise dreimal so breit ist wie der andere Leiter (7k).

7. Vorrichtung nach einem der
Ansprüche 1 bis 3,
dadurch gekennzeichnet,
daß sich die Leiter (7c, 7d) meanderförmig um den Körper (2) erstrecken.

8. Vorrichtung nach einem der
Ansprüche 1 bis 6,
dadurch gekennzeichnet,
daß sich die Anschlüsse der elektrischen Leiter (7a, 7b; 7c, 7d; 7e, 7f; 7g, 7h; 7i, 7k) in das Innere des Körpers (2; 2'; 2'') erstrecken.

9. Vorrichtung nach einem der
Ansprüche 1 bis 5,
dadurch gekennzeichnet,
daß die Sonde (1; 1'; 1'') mit einem isolierenden Überzug versehen ist, welcher eine konstante Dielektrizitätskonstante hat.

10. Vorrichtung nach einem der
Ansprüche 1 bis 6,
dadurch gekennzeichnet,
daß die Sonde (1; 1'; 1'') zur Durchführung der Messung in ein Rohr eingeführt wird, dessen Innendurchmesser 0,1 mm bis 3 mm, vorzugsweise 0,5 mm bis 2 mm, weiter vorzugsweise 1 mm größer als der Durchmesser der Sonde (1; 1'; 1'') ist.

11. Vorrichtung nach einem der
Ansprüche 1 bis 7,
dadurch gekennzeichnet,
daß die Sonde (1; 1'; 1'') an einem Ende spitz zuläuft.

12. Vorrichtung nach einem der
Ansprüche 1 bis 9,
dadurch gekennzeichnet,
daß der Körper rohrförmig ausgebildet ist und an seinen Stirnseiten Befestigungsflansche aufweist.
